# EUROPÄISCHE PATENTSCHRIFT

(11) **EP 2 709 893 B1**
(45) Veröffentlichungstag und Bekanntmachung des Hinweises auf die Patenterteilung: **15.04.2020**
(21) Anmeldenummer: 12722128.1
(22) Anmeldetag: 15.05.2012
(51) Int. Cl.: B61D 15/00

(54) **SYSTEM, VERFAHREN UND EISENBAHNWAGEN ZUM GLEISGEBUNDENEN TRANSPORT VON GEGENSTÄNDEN**
SYSTEM, METHOD AND RAILWAY CARRIAGE FOR THE RAIL-BOUND TRANSPORTATION OF OBJECTS
SYSTÈME, PROCÉDÉ ET WAGON POUR LE TRANSPORT SUR RAILS D'OBJETS

(30) Priorität: 16.05.2011 DE 102011101636; 23.12.2011 DE 202011109502 U; 15.03.2012 DE 102012005287
(43) Veröffentlichungstag der Anmeldung: 26.03.2014
(73) Patentinhaber: K&K Maschinenentwicklungs GmbH & Co. KG, 81827 München (DE)
(72) Erfinder: DEHMEL, Wolfram Peter, 94032 Passau (DE)
(74) Vertreter: Manitz Finsterwald Patent- und Rechtsanwaltspartnerschaft mbB
(86) Internationale Anmeldenummer: PCT/EP2012/059032
(87) Internationale Veröffentlichungsnummer: WO 2012/156408

(56) Entgegenhaltungen:
- EP-A1- 1 568 562
- EP-A2- 1 775 190
- DE-A1- 4 213 925
- DE-U1- 29 820 833

## Beschreibung

Die vorliegende Erfindung betrifft ein Verfahren zum gleisgebundenen An- und Abtransport von Material zu bzw. von Eisenbahnarbeitsfahrzeugen, mittels mehrerer zusammenkoppelbarer Eisenbahnwagen, die jeweils mindestens eine Transportbahn aufweisen, auf welcher die Gegenstände längs der Eisenbahnwagen verfahrbar sind und die so ausgebildet ist, dass die Transportbahnen zusammengekoppelter Eisenbahnwagen aneinander anschließen.

Arbeiten an Eisenbahngleisen werden soweit wie möglich gleisgebunden durchgeführt, da dadurch die Beeinträchtigung des Schienenverkehrs und die Belastung der Umgebung gering gehalten werden kann. Eingesetzt werden hierfür schienenfahrbare Arbeitsfahrzeuge wie beispielsweise Schotterbettreinigungsmaschinen, Untergrundsanierungsmaschinen und dergleichen, aber auch Maschinen zum Rückbau oder zur Neuherstellung von Schienenfahrbahnen. In praktisch allen Fällen muss zu den Arbeitsfahrzeugen Material antransportiert und/oder von diesen abtransportiert werden. So muss beispielsweise bei Schotterbettreinigungsmaschinen Abraum aus Altschotter und Untergrundmaterial abtransportiert werden. Bei Untergrundsanierungsmaschinen und bei Maschinen zur Neuherstellung von Schienenfahrbahnen muss Material für den Untergrund bzw. die Schienenfahrbahn antransportiert werden. Außerdem kann bei derartigen Arbeitsfahrzeugen Bedarf an sonstigen Materialien wie Wasser, Treibstoff, Kleineisen, Schwellen und dergleichen bestehen.

Während der Antransport der sonstigen Materialien oftmals durch so genannte Portalkräne oder ggf. gar nicht schienengebunden, also über Lastkraftwagen, erfolgt, stehen für den An- und Abtransport von Abraum, Schotter, Sand und dergleichen sogenannte Materialförder- und Siloeinheiten, kurz MFS, zur Verfügung. Hierbei handelt es sich um nach oben zumeist offene Eisenbahnwagen, deren Böden mit Förderbändern zur Förderung der genannten Materialien ausgestattet sind. An einem Ende dieser Eisenbahnwagen ist zudem ein Übergabeförderband angeordnet, mit welchem das Material von Wagen zu Wagen oder, nach Ausschwenken des Übergabeförderbandes, zur Seite gefördert werden kann.

Nachteilig bei diesen bekannten MFS-Wagen ist die Verwendung von Förderbändern nur am Boden der Wagen. Dadurch tritt bei der Förderung eine erhebliche Reibung zwischen dem Material und den Seitenwänden des Wagens auf, die zu einem hohen Energieverlust und einem Verschleiß durch Abrasion führt. Es sind daher große Motoren zum Antrieb der Fördereinrichtungen erforderlich. Aufgrund der offenen Bauweise tritt außerdem eine Verschmutzung nicht nur der Wagen sondern auch der Umgebung auf. Ein weiterer Nachteil besteht darin, dass durch die Förderung eine Entmischung der Materialien auftritt, was bei Materialien für die Untergrundsanierung oder die Neuherstellung einer Schienenfahrbahn unerwünscht ist.

Die EP 1 775 190 A2 offenbart ein Verfahren gemäß dem Oberbegriff des Anspruchs 1.

Der Erfindung liegt die Aufgabe zugrunde, ein Verfahren der eingangs genannten Art anzugeben, welches die genannten Nachteile nicht aufweist und auch allgemein zum Gütertransport auf Eisenbahnstrecken eingesetzt werden kann.

Bei einem erfindungsgemäßen Verfahren wird die Aufgabe dadurch gelöst, dass das Material auf den Eisenbahnwagen mittels Transportkörpern in Form von Transportbehältern transportiert wird, wobei die Transportbehälter auf den Eisenbahnwagen längs aneinander anschließbarer Transportbahnen von Wagen zu Wagen verfahrbar sind.

Erfindungsgemäß werden also anstelle der Transportbänder Transportbehälter verwendet, die auf den Eisenbahnwagen verfahren werden. Die Transportbehälter können auf Fahrbahnen, Rollenbahnen, Gleitbahnen, Schwebebahnen, Hängebahnen, Förderbändern, Förderkettenbahnen oder sonstigen Bahnen verfahren werden.

Ein wesentlicher Vorteil der Erfindung besteht darin, dass durch die Verwendung von Transportbehältern beim Transport viel weniger Reibung auftritt. Der Energieverlust ist dadurch deutlich geringer als bei dem bekannten System. Zudem tritt aufgrund der Verwendung von Transportbehältern so gut wie keine Entmischung der Materialien auf. Auch die Verschmutzung ist gegenüber dem bekannten System deutlich geringer. Eine Verschmutzung der Umgebung tritt praktisch überhaupt nicht auf. Ein weiterer Vorteil besteht darin, dass alle Arten von Materialien, also insbesondere auch Wasser, Kleineisen, Schwellen und Treibstoff neben Fahrbahnmaterial und Schotter transportiert werden können. Damit können diese Materialien ebenso gleisgebunden an- bzw. abtransportiert werden wie bisher Schotter und Sand, und zwar auch gleichzeitig, indem verschiedene Transportbehälter mit unterschiedlichem Material befüllt werden. Auch können durch die Erfindung alle Materialien, wenn gewünscht, von nur einer Seite der Maschine aus an- und/oder abtransportiert werden.

Ein weiterer Vorteil der Erfindung besteht in der Möglichkeit, mehrere Transportbehälter gleichzeitig zu transportieren. Dies erhöht den Durchsatz gegenüber Portalkranlösungen und gegenüber dem Transport mittels MFS beträchtlich.

Im folgenden wird mit dem Ausdruck "Transportkörper" der anspruchsgemäße Transportbehälter bezeichnet.

Die Erfindung kann nicht nur zum An- und Abtransport von Material zu bzw. von Eisenbahnarbeitsfahrzeugen sondern ganz allgemein zum Transport von Gegenständen auf Eisenbahnstrecken eingesetzt werden. Ein wesentlicher Vorteil besteht auch hier darin, dass die Eisenbahnwagen sehr schnell be- und entladen werden können, indem die Transportkörper für die Gegenstände längs der aneinander anschließenden Transportbahnen der Eisenbahnwagen verfahren werden. Am Startpunkt eines erfindungsgemäßen Zuges werden also die zuvor mit den Gegenständen beladenen Transportkörper einfach auf die Eisenbahnwagen verfahren, beispielsweise gerollt. Hierfür können die Transportbahnen der Eisenbahnwagen mit geeigneten Rollen versehen sein. Entsprechend werden die Transportkörper am Zielort des Zuges von den Eisenbahnwagen entladen. Das Be- und Entladen des Zuges ist also in sehr kurzer Zeit möglich.

Zudem besteht die Möglichkeit, dass die Transportkörper während der Fahrt des Zuges auf dem Zug umsortiert werden, um beim Entladen eine bestimmte Abfolge der Transportkörper zu erhalten. So kann beispielsweise an einem ersten Zielort nur ein Teil der Transportkörper schnell entladen werden, indem diese Transportkörper an das Entladeende des Zuges sortiert werden. An einem zweiten Zielort können dann die daran anschließend sortierten Transportkörper entladen werden. An dem ersten Zielort können auch als Ersatz für die entladenen Transportkörper andere Transportkörper aufgeladen werden, die dann ebenfalls während der Weiterfahrt an eine geeignete Stelle des Zuges sortiert werden können. Zum Umsortieren sind Einrichtungen zum zeitweisen Entfernen von Transportkörpern aus einer Transportbahn vorgesehen. Die Eisenbahnwagen können auch zwei oder mehr parallele Transportbahnen aufweisen, zwischen denen die Transportkörper gewechselt werden können.

Die parallelen Fahrwege ermöglichen einen kontinuierlichen An- und/oder Abtransport von Material, indem die Transportkörper auf einer Fahrbahn zu dem Arbeitsfahrzeug verfahren und dort befüllt bzw. entladen werden und auf einer anderen Fahrbahn be- bzw. entladen wieder von dem Arbeitsfahrzeug weggefahren werden. Mehrere Transportkörper können so kontinuierlich hintereinander zu dem Arbeitsfahrzeug hin und von diesem weg verfahren werden, um Material an- und/oder abzutransportieren.

Die Transportkörper sind auf den Fahrbahnen bevorzugt in beide Richtungen verfahrbar. Das System ist dadurch besonders flexibel.

Die Transportbahnen verlaufen bevorzugt zumindest im Wesentlichen horizontal und/oder schließen zumindest im Wesentlichen absatzlos aneinander an. Damit ist eine Übergabe der Transportkörper von Eisenbahnwagen zu Eisenbahnwagen besonders gut möglich. Zwischen den Übergabestellen könnten die Transportbahnen auch nicht horizontal verlaufen, beispielsweise eine Senke bilden. Es könnte dann genügen, die Transportkörper nur am Anfang und/oder Ende jeder Transportbahn eines Eisenbahnwagens anzutreiben. Dazwischen würden sich die Transportkörper durch ihre Masse von selbst fortbewegen.

Nach einer bevorzugten Ausgestaltung der Erfindung sind zwei Fahrbahnen übereinander angeordnet. Dies hat sich als besonders vorteilhaft herausgestellt, insbesondere zur Be- und Entladung der Transportkörper.

Nach einer weiteren Ausgestaltung der Erfindung ist an mindestens einem Wagen eine Einrichtung zum zeitweisen Entfernen eines Transportkörpers von einer Fahrbahn oder zum Wechseln der Fahrbahn vorgesehen. Die Flexibilität des Systems ist dadurch weiter erhöht. Insbesondere kann dadurch ein Umsortieren der Transportkörper und ein Zwischenlagern einzelner Transportkörper erfolgen. Gemäß einer Ausführungsform ist wenigstens einer der Transportkörper mit Raupenketten versehen und in der Lage, bei Erreichen des Zielortes seitlich von der betreffenden Transportbahn herunterzufahren. Dies ermöglicht ein effektives Entladen des transportierten Gutes von dem Transportkörper, beispielsweise das Ablegen einer Weiche neben dem Fahrgleis.

Nach noch einer Ausgestaltung der Erfindung ist an mindestens einem, insbesondere an einem Zugende anzuordnenden Wagen eine Vorrichtung zur maschinellen Übergabe von Transportgut zwischen dem Wagen und einem Arbeitsfahrzeug und/oder einer Be- und/oder Entladestelle vorgesehen. Dies erleichtert die Be- und/oder Entladung der Transportkörper an dem Arbeitsfahrzeug.

Bevorzugt ist des Weiteren mindestens ein Wagen mit einer seitlichen Entlademöglichkeit für die Transportkörper ausgestattet. Dadurch können die Transportkörper seitlich entnommen und gegen andere Transportkörper ausgetauscht werden. So ist es möglich, einen mit Abfuhrmaterial gefüllten Transportkörper an einer geeigneten Stelle gegen einen leeren Transportkörper auszutauschen, oder einen leeren Transportkörper gegen einen anderen Transportkörper mit Zufuhrmaterial. Ebenso ist es möglich, einen mit Abraum gefüllten Transportkörper gegen einen mit Zufuhrmaterial gefüllten Transportkörper zu tauschen. Die Entlademöglichkeit kann dabei auch allein darin bestehen, dass der Wagen eine Zugriffsmöglichkeit für ein Be- und Entladegerät schafft wie beispielsweise ein Bagger oder ein Hubfahrzeug.

Nach einer besonders bevorzugten Ausgestaltung ist an mindestens einem Wagen eine Einrichtung zum Absetzen und/oder Aufnehmen von Transportkörpern auf bzw. von dem Fahrgleis vorgesehen. Dies ermöglicht ein sehr schnelles Be- und/oder Entladen eines erfindungsgemäßen Zuges. Dies ist insbesondere bei einem Zug zur Ver- und/oder Entsorgung eines Eisenbahnarbeitsfahrzeuges wichtig. Ein abgearbeiteter Zug kann beispielsweise an eine entfernte Stelle des Schienennetzes gefahren werden, wo vorab neue Transportkörper auf dem Fahrgleis gelagert wurden. Zunächst werden die neuen Transportkörper über eine geeignete Einrichtung an einem am Ende des Zuges vorhandenen Wagen vom Fahrgleis aufgenommen und auf eine Transportbahn des Zuges verfahren. Danach werden die abgearbeiteten Transportkörper von einer anderen Transportbahn des Zuges heruntergefahren und über die genannte Einrichtung auf dem Fahrgleis abgesetzt. Nun kann der Zug mit den neuen Transportbehältern zurück zum Eisenbahnarbeitsfahrzeug fahren und dieses wieder ver- und/oder entsorgen. Hierbei ist es auch möglich, die Transportkörper auf dem Gleis zu stapeln, um die nötige Gleislänge und damit die üblicherweise ebenso lange Baustelleneinrichtungsfläche zu reduzieren.

Ein besonders günstiger Arbeitsbetrieb wird dadurch ermöglicht, dass ein Teil der vorhandenen Eisenbahnwagen an der Maschine verbleibt, während der übrige Teil der Eisenbahnwagen zwischen der Baustelle und dem Materialversorgungsort pendelt. Die pendelnden Wagen verbleiben stets nur während des relativ kurzen Zeitraums des Materialwechsels bei den an der Maschine befindlichen Wagen, an welche sie während dieses Zeitraums angekuppelt werden. Bei Verwendung einer Schraubenkupplung muss die Maschine während des An- und Abkuppelns kurz anhalten. Es kann aber auch eine Vorrichtung vorgesehen sein, welche fortlaufend den Pufferdruck erfasst und den Materialwechsel kontrolliert abbricht, wenn der Pufferdruck einen Schwellenwert unterschreitet. Eine derartige Vorrichtung kann das vorstehend erwähnte An- und Abkuppeln überflüssig machen.

Bevorzugt sind die Transportkörper ohne zusätzliche Verlademittel wie Kräne von Eisenbahnwagen zu Eisenbahnwagen verfahrbar. Weiterhin sind die Transportkörper vorzugsweise direkt auf den Transportbahnen von Eisenbahnwagen zu Eisenbahnwagen verfahrbar. Mit anderen Worten dienen ausschließlich die Transportbahnen selbst zur Übergabe der Transportkörper von Wagen zu Wagen, indem z.B. die Transportkörper mittels eines eigenen Antriebs von einem am Wagenende befindlichen Abschnitt einer Transportbahn auf die Transportbahn des nächsten Wagens wechseln oder indem ein solcher Abschnitt die Transportkörper aktiv auf die Transportbahn des nächsten Wagens befördert. Die aufwändige und kostspielige Bereitstellung von Portalkränen oder dergleichen kann so vermieden werden.

Wenigstens ein Transportkörper kann als offener oder geschlossener Behälter ausgebildet sein. Offene Behälter sind einfach zu beladen, während geschlossene Behälter einen guten Schutz für die zu transportierenden Gegenstände bieten. Derartige Behälter können somit je nach Ausgestaltung Flüssigkeiten wie Wasser oder Treibstoff, Schüttgüter wie z.B. Schotter oder auch Bauteile wie Kleineisen oder Schwellen aufnehmen und diese durch Verfahren auf den Transportbahnen zu einem Eisenbahnarbeitsfahrzeug oder allgemein zu einer Eisenbahnarbeitsstelle hin oder von dieser weg befördern. Wenigstens ein Transportkörper kann auch als plattenartiger Träger ausgebildet sein, um so einen Transport von schweren und sperrigen Gütern wie Schienen oder Betonplatten zu ermöglichen. Mittels einer Anordnung von unterschiedlich gestalteten Transportkörpern kann somit eine Vielzahl von verschiedenartigen Materialien, Maschinen und Bauteilen gleisgebunden zu einer Eisenbahnarbeitsstelle bzw. von dieser weg transportiert werden, wodurch ein besonders effektives Arbeiten am Gleis möglich ist.

Es ist allerdings nicht zwingend erforderlich, für jedes zu transportierende Ladegut einen Behälter oder Träger vorzusehen. Vielmehr kann ein auf den Transportbahnen zu transportierendes Stück Ladegut selbst einen Transportkörper bilden. In dieser Hinsicht kann wenigstens ein Transportkörper als auf den Transportbahnen zu transportierendes Stückgut ausgebildet sein. Mit anderen Worten können die Transportbahnen speziell für einen Transport von Transportkörpern in Form von bestimmten schweren und/oder sperrigen Bauteilen - auch ohne Behälter oder Träger - ausgelegt sein. Auf diese Weise können Schienen, Weichen, Betonplatten und dergleichen gleisgebunden zur gewünschten Arbeitsstelle oder von dieser weggebracht werden, indem sie z.B. direkt auf Rollenbahnen der jeweiligen Eisenbahnwagen befördert werden.

Weiterhin kann wenigstens ein Transportkörper als wenigstens eine gleisbezogene Arbeitsfunktion erfüllende Einrichtung, insbesondere Maschine, ausgebildet sein. Somit können die Transportbahnen dazu genutzt werden, schwere Arbeitsvorrichtungen unterschiedlicher Art auf einfache Weise zu einer am Fahrgleis befindlichen Eisenbahnarbeitsstelle zu befördern. Als eine Einrichtung, welche eine gleisbezogene Arbeitsfunktion erfüllt, kann nicht nur eine Maschine wie z.B. ein Bagger oder ein Hubfahrzeug, sondern auch eine Mess- oder Prüfvorrichtung, ein Überwachungsgerät oder eine komplexe Einrichtung wie eine mobile Tankstelle vorgesehen sein. Ein Transportkörper im Sinne der Erfindung kann also nicht nur zum Aufnehmen oder Tragen einer Maschine ausgebildet sein, sondern auch selbst als Maschine, Messvorrichtung oder dergleichen ausgebildet sein. Die Maschine kann dabei auch durch Zusammenschließen von zwei oder mehr Transportkörpern gebildet werden. Auf diese Weise können Messungen oder Bauarbeiten besonders effektiv ausgeführt werden, da die Maschine nicht straßengebunden oder mittels separater Eisenbahnwagen herbei- und wieder weggeschafft werden muss.

Gemäß einer Ausgestaltung der Erfindung ist wenigstens ein Transportkörper zum Personentransport ausgebildet. Damit können Personen, insbesondere Arbeiter, längs Eisenbahnfahrzeugen befördert werden.

Vorzugsweise sind die Transportkörper hinsichtlich ihrer äußeren Abmessungen, ihres Gewichts und/oder ihrer Oberflächenbeschaffenheit für den Transport auf den Transportbahnen angepasst oder umgekehrt. Mit anderen Worten sind die Transportkörper und die Transportbahnen aufeinander abgestimmt, um so eine effektive Beförderung, insbesondere ohne zusätzliche Verlademittel wie Kräne, zu ermöglichen. Insbesondere können die Breite und/oder die maximale Auflagelast der Transportbahnen bereits bei der Konstruktion eines erfindungsgemäßen Systems derart gewählt werden, dass auf ihnen der Transport von an einer Eisenbahnarbeitsstelle benötigten Maschinen oder Großbauteilen wie Schienen, Betonplatten oder sogar Weichen möglich ist.

Als ein Transportkörper im Sinne der Erfindung ist somit jedes Stück Ladegut anzusehen, das aufgrund der Beschaffenheit der Transportbahnen speziell für eine Verfahrbarkeit auf den Transportbahnen ausgebildet ist.

Um einen möglichst effektiven Transport zu ermöglichen, können die Transportkörper besondere Abrollflächen für Rollen von Rollenbahnen an einer oder mehreren ihrer Seiten aufweisen. Ferner könnten die Transportkörper mit einem im Wesentlichen vollständig glatten Boden versehen sein. Damit kann der Transportkörper in vorteilhafter Weise verfahren und/oder geführt werden. Die Abrollflächen sind dabei insbesondere so ausgebildet, dass sich ein ausreichender Reibwiderstand zwischen den Rollen einer Rollenbahn und dem Transportkörper ergibt, um ein Durchdrehen der Rollen zu vermeiden oder zu verringern. Auch eine Ausbildung der Abrollfläche zur Verringerung der Belastung der Rollen einer Rollenbahn und damit deren Verschleiß, insbesondere beim Übergang des Transportkörpers von einer Rolle zur nächsten ist vorteilhaft. Beispielsweise kann eine Rampe oder Rundung am Ende der Abrollfläche vorgesehen sein.

Das Vorsehen einer Abrollfläche an der Oberseite des Transportkörpers kann dazu dienen, ein Abrollen einer Rolle auf der Oberseite des Transportkörpers zu verbessern. Mit einer solchen Rolle kann beispielsweise das Abkippen des Transportkörpers beim Übergang des Transportkörpers von einem Eisenbahnfahrzeug zum anderen verhindert werden.

Abrollflächen an der Seite des Transportkörpers dienen zur Seitenführung über Rollen von Rollenbahnen. Die Abrollflächen können sich auch in einer speziellen Nut oder an einem Steg an der Unterseite des Transportkörpers befinden. An den Transportbahnen kann zusätzlich zu einer vorhandenen Seitenführung eine weitere Führung vorgesehen sein, welche ähnlich wie eine Leitplanke den Transportkörper auch bei einem Versagen der Seitenführung am Verlassen der Transportbahn hindert.

Zum Verfahren der Transportkörper längs der Transportbahnen kann an diesen ein Antrieb vorgesehen sein, beispielsweise angetriebene Rollen. Ein Antrieb kann aber auch an den Transportkörpern selbst oder an anderer Stelle der Eisenbahnwagen, beispielsweise seitlich der Transportbahnen vorgesehen sein. Gemäß einer Ausführungsform der Erfindung weisen die Transportkörper einen führerlosen Antrieb auf, d.h. die angetriebene Bewegung des Transportkörpers erfolgt automatisch gesteuert oder ferngesteuert. Es ist dann nicht notwendig, die Transportkörper mit Fahrpersonal zu besetzen. Ein Antrieb am Eisenbahnwagen hat den Vorteil, dass die Transportkörper sehr einfach ausgebildet sein können, beispielsweise als einfache Transportboxen. Bei einer Ausführungsförm der Erfindung weist ein Eisenbahnwagen einen Antrieb zum Verfahren der Trarisportkörper längs der Transportbahnen auf, wobei die Transportkörper selbst keinen eigenen Antrieb aufweisen.

Die Antriebe sind bevorzugt so ausgebildet, dass mit ihnen eine Kurvenfahrt der Transportkörper entsprechend dem Gleisbogen des Fahrgleises erzeugbar ist und/oder dass ein Verfahren der Transportkörper auch in Steigungen und Überhöhungen des Gleises möglich ist. Dadurch ist es möglich, die Transportkörper auf beliebiger Fahrstrecke zu verfahren, beispielsweise um diese umzusortieren.

Bei einem Antrieb der Transportkörper mittels Rollen können alle vorhandenen Rollen angetrieben sein, beispielsweise durch einen zentralen Antrieb, oder es kann nur ein Teil der Rollen angetrieben sein. Z.B. können wenigstens zwei in Fahrtrichtung hintereinander befindliche Rollen durch jeweilige individuelle Antriebe oder durch einen gemeinsamen Antrieb angetrieben sein. Es können auch jeweils zwei bezüglich der Transportbahn gegenüberliegende Rollen mit individuellen Antrieben oder mit einem gemeinsamen Antrieb ausgestattet sein. Bei der letztgenannten Variante kann in dem Antriebsstrang, welcher den Motor des Antriebs mit den beiden Rollen verbindet, ein Differentialgetriebe vorgesehen sein. Dieses Differentialgetriebe kann als Selbst- oder Fremdsperrdifferential ausgeführt sein. Weiterhin kann eine Vorrichtung zum so genannten "Torque Vectoring" vorgesehen sein. Derartige Vorrichtungen können eine Dreh- oder Schwenkbewegung der Transportkörper am Übergang von einem Wagen zum nächsten Wagen unterstützen. Derartige Drehbewegungen können insbesondere hilfreich sein, wenn die Eisenbahnwagen in einem Gleisbogen stehen. Eine Schwenkbewegung der Transportkörper kann auch durch eine Differenzdrehzahl von gegenüberliegenden Rollen, vorzugsweise am ersten bzw. letzten Rollenpaar des jeweiligen Wagens, eingeleitet werden. Das Maß der Schwenkbewegung kann hierbei durch Sensoren an den Enden einer fest gekuppelten Wagengruppe ermittelt werden. Zusammen mit dem auf dem Gleis zurückgelegten Weg der Wagengruppe kann der Knickwinkel zwischen den Wagen geschätzt werden, und zwar auch bei solchen Wagen, an denen kein Sensor angebracht ist. Die Ermittlung der einzelnen Knickwinkel erfolgt vorzugsweise automatisiert.

Der Antrieb der Rollen erfolgt vorzugsweise elektrisch, z.B. mittels eines Elektromotors. Vorzugsweise kommt eine geschaltete Reluktanzmaschine, auch als Switched-Reluctance-Motor oder SRM bezeichnet, zur Anwendung. Derartige Motoren zeichnen sich durch eine hohe Robustheit und eine einfache Bauweise aus. Ferner ist die Drehzahl-Moment-Kennlinie für die vorliegende Anwendung gut geeignet und der Wirkungsgrad ist über einen großen Drehzahlbereich ausreichend hoch. Es kann auch ein Umrichter vorgesehen sein, welcher vorzugsweise nahe am Motor, z.B. direkt im zugehörigen Motorgehäuse, angeordnet ist.

Die Drehbewegung der Ausgangswelle des Elektromotors kann dabei direkt oder unter Zwischenschaltung eines Getriebes an die Rollen übertragen werden. Alternativ kann der Antrieb der Rollen auch hydraulisch, pneumatisch oder mechanisch bewerkstelligt werden. Auch könnte die Anordnung aus Transportbahnen und Transportkörpern als Magnetschwebebahn ausgebildet sein.

Ein Antrieb mittels Rollen kann derart ausgebildet sein, dass eine Rückgewinnung von Energie (Rekuperation) möglich ist, z.B. beim Abbremsen eines Transportkörpers oder beim Betrieb einer Rollenbahn im Gefälle.

Der Betriebszustand des Rollenantriebs und/oder von dessen Komponenten kann periodisch und/oder kontinuierlich durch eine geeignete Einrichtung erfasst werden. Diese Einrichtung kann fest installiert sein oder manuell bereitgestellt werden. Die Bereitstellung kann auch automatisiert erfolgen.

Wenigstens eine Rolle des Rollenantriebs kann zudem mit einer Bremseinrichtung ausgestattet sein. Dadurch kann eine selbständige Bewegung der Transportkörper - z.B. bei einer Störung des Rollenantriebs - verhindert werden. Die Bremseinrichtung ist vorzugsweise derart ausgeführt, dass sie in Richtung des sicheren Zustands ausfällt. Vorzugsweise wird die Bremseinrichtung mechanisch betätigt und elektrisch, pneumatisch, hydraulisch oder mechanisch gelöst. Es kann auch eine automatisch wirkende Bremse vorgesehen sein, welche vorzugsweise mit einer Notlösevorrichtung ausgestattet ist. Alternativ oder zusätzlich kann eine Vorrichtung zur Beschränkung der Maximalgeschwindigkeit der Transportkörper in den Rollenantrieb integriert sein. Weiterhin kann der Rollenantrieb eine Vorrichtung umfassen, welche die Bewegung des Transportkörpers in eine bestimmte - vorzugsweise wählbare - Richtung unterbindet. Die Wirkungsrichtung dieser Vorrichtung kann manuell oder ferngesteuert umgestellt bzw. ganz aufgehoben werden.

Wenigstens eine der Rollen des Rollenantriebs kann auch mit einer Vorrichtung zum Erfassen der Drehrichtung, des Drehwinkels, der Drehzahl und/oder der Drehbeschleunigung der Rolle versehen sein. Die Vorrichtung kann ein entsprechendes Signal ausgeben, anhand dessen das Durchdrehen oder Blockieren von Rollen des Rollenantriebs erkannt werden kann.

Die Rollen des Rollenantriebs können eine Vollgummibandage umfassen. Alternativ kann auch eine Luftreifenbandage vorgesehen sein. Je nach Anwendung können die Rollen aber auch als Stahlrollen ausgebildet sein. Sollten die Rollen als Vollgummirollen ausgeführt sein, kann die Lauffläche ein Profil zum Erzielen einer besseren Lastverteilung, z.B. ein Tonnenprofil, aufweisen. Weiterhin kann die Steifigkeit einzelner als Vollgummirollen ausgeführter Rollen durch wenigstens eine Längs- und/oder Querrille beeinflusst werden. Ferner kann die Rolle mit einem Autoreifenähnlichen Profil ausgestattet sein. Es kann auch wenigstens eine Rolle aus mehreren Einzelrollen zusammengesetzt sein.

Um eine gleichmäßige Belastung durch die Transportkörper zu erreichen, kann eine Vorrichtung bereitgestellt werden, welche ein so genanntes "Load Balancing" durch Verwinden bewirkt.

Grundsätzlich kann der Antrieb anstelle über Rollen auch über Spindeln, Ketten oder Seile realisiert sein. Außerdem kann anstelle eines reibschlüssigen Antriebs ein formschlüssiger Antrieb, z.B. über wenigstens einen Hydraulikzylinder, vorgesehen sein.

Weiter bevorzugt können die Transportkörper einzeln und/oder in Gruppen und/oder gemeinsam verfahrbar sein. Damit wird die Flexibilität des Systems weiter erhöht. Unter anderem ist es möglich, bei Steigungen weniger als alle Transportkörper gleichzeitig zu verfahren, um die nötige Leistung und den nötigen Energieaufwand gering zu halten. Die gemeinsame Verfahrbarkeit ermöglicht ein schnelles Be- und/oder Entladen. Die Einzelverfahrmöglichkeit erleichtert ein Umsortieren der Transportkörper und erhöht insgesamt die Flexibilität des Systems.

Die Transportkörper können nach einer weiteren Ausgestaltung der Erfindung mechanisch und/öder durch entsprechende Steuerung miteinander koppelbar sein. Dadurch können zwei oder mehr Transportkörper auf einfache Weise gemeinsam verfahren werden.

Nach einer weiteren Ausgestaltung der Erfindung sind die Transportkörper zum Transport gegenüber einer Transportbahn oder dem Eisenbahnwagen verriegelbar. Hierdurch kann verhindert werden, dass sich die Transportkörper während der Fahrt von selbst bewegen. Eine Verriegelung kann z.B. durch verstellbare Bolzen am Wagen realisiert sein, welche in entsprechende Ausnehmungen des Transportkörpers eingreifen. Je nach Anwendung kann die Betätigung der Verriegelung automatisch oder ferngesteuert erfolgen. Es kann auch eine Überwachungsvorrichtung zum automatischen Feststellen des Verriegelungszustands vorgesehen sein.

Nach einer weiteren Ausgestaltung der Erfindung sind die Transportkörper mit einer maschinenlesbaren Codierung versehen. Dadurch kann der Be- und/oder Entladevorgang automatisiert werden. Auch ist nach einer weiteren Ausgestaltung der Erfindung eine Fernsteuerung der Be- und/oder Entladung der Transportkörper und der Bewegung der Transportkörper möglich.

An den Transportkörpern können auch Datenträger angebracht sein, welche durch eine Schreib-/ Lesevorrichtung am Wagen beschrieben und ausgelesen werden können. Weiterhin kann ein Datenübermittlungssystem vorgesehen sein, welches einen Informationsaustausch zwischen verschiedenen Wagen und/oder der Maschine ermöglicht. Die Informationen können sich z.B. auf den Inhalt der Transportkörper oder auf die Steuerung der Maschine beziehen.

Weiterhin können Mittel zum Erfassen der Position der Transportkörper in Bezug auf die Transportbahn vorgesehen sein. Insbesondere können zur Erfassung der Position mechanische, optische, magnetische und/oder induktive Detektoren an den Transportbahnen oder an anderer Stelle an den Eisenbahnwagen angeordnet sein. Eine derartige Positionserfassung kann z.B. ein Verriegeln der Transportkörper wie vorstehend beschrieben erleichtern.

Gemäß einer weiteren Ausführungsform der Erfindung ist eine Warneinrichtung vorgesehen, welche einen Bediener des Systems auf herannahende, aus dem Rollbahnbetrieb und/oder aus dem Zugbetrieb auf einem oder mehreren Gegengleisen resultierende Gefahren hinweist, vorzugsweise akustisch, optisch, sensorisch und/oder mechanisch.

Die Eisenbahnwagen können auch mit einer zusätzlichen Lade- und/oder Fördermöglichkeit für Güter wie Flüssigkeiten oder Gase ausgebildet sein, insbesondere miteinander koppelbare Rohrleitungen. Damit kann beispielsweise ein Eisenbahnarbeitsfahrzeug mit nötigem Wasser oder Brennstoff versorgt und/oder Abwasser entsorgt werden.

Einzelne Wagen oder Gruppen von Wagen können erfindungsgemäß auch mit Zusatzeinrichtungen für mehrere oder alle Wagen versehen sein, wie Stromversorgungseinrichtung, Umrichter, Bremseinrichtung und dergleichen. Die entsprechende Versorgung eines Zuges oder Teils hiervon kann dadurch auf kostengünstige Weise durch ein oder mehrere einzelne Wagen gewährleistet werden. Außerdem kann mindestens ein Wagen einen Fahrantrieb zum Fahren auf einem Gleis aufweisen. Eine Lokomotive kann dadurch entbehrlich sein.

Nach einer bevorzugten Ausgestaltung der Erfindung sind zwei oder mehr Eisenbahnwagen starr miteinander koppelbar. Dadurch ist es möglich, auf Einrichtungen wie Puffer zwischen den Wagen zu verzichten. Die Wagen können dadurch auch besonders eng miteinander gekoppelt werden, wodurch die Gesamtlänge des Zuges geringer gehalten werden kann.

Die einzelnen Eisenbahnwagen werden bevorzugt möglichst kurz ausgeführt, um in einem Gleisbogen den Knickwinkel gering zu halten. Vorzugsweise kommen als Eisenbahnwagen daher zweiachsige Waggons zum Einsatz. Alternativ können die Wagen auch einen Gliederzug mit Jakobs-Drehgestellen bilden. Grundsätzlich können die Wagen aber auch zwei-, drei- oder vierachsige Drehgestelle aufweisen.

Wenigstens ein Eisenbahnwagen kann derart gestaltet sein, dass die Transportkörper von einer oberen auf eine untere Transportebene oder umgekehrt wechseln können. Hierbei wird vorzugsweise die zum Anheben des Transportkörpers benötigte Energie zwischengespeichert, um so die Belastung der Energieversorgung zu minimieren und/oder den Hubvorgang zu beschleunigen. Ferner kann die beim Absenken des Transportkörpers frei werdende potentielle Energie zurückgewonnen und bei Bedarf für andere Aufgaben zur Verfügung gestellt werden. Die Zwischenspeicherung der Energie kann mechanisch, elektrisch, pneumatisch, hydraulisch oder chemisch erfolgen. Sofern die Energiespeicherung auf pneumatischem Weg erfolgt, kann die Kraft-Weg-Kennlinie des pneumatischen Speichers mit einem Getriebe an die für den Hub benötigte Kennlinie angepasst werden. Dadurch kann der Energieinhalt des Speichers vollständig, d.h. ohne Drosselverluste, genutzt werden. Außerdem kann die potentielle Energie des Transpörtkörpers beim Wechsel von der oberen auf die untere Transportebene vollständig in den pneumatischen Speicher transferiert werden.

Eine Vorrichtung zum vorübergehenden Entfernen eines Abschnitts der oberen Rollbahn kann ein Passieren des Transportkörpers auf die untere Rollbahn ermöglichen. Die untere Rollbahn ist hierbei auch dann benutzbar, wenn der Abschnitt der oberen Rollbahn entfernt ist. Alternativ kann auch ein Abschnitt der oberen Rollbahn mitsamt dem Transportkörper abgesenkt werden, um diesen auf die untere Rollbahn zu transferieren . Diese Ausgestaltung ermöglicht einen besonders einfachen Aufbau.

Die Transportkörper können auf den Transportbahnen zum Be- und/oder Entladen von Eisenbahnarbeitsfahrzeugen oder zum Umsortieren jeweils in beide oder in entgegengesetzte Richtungen verfahren werden. Damit kann das Be- und/oder Entladen bzw. das Umsortieren besonders schnell vonstattengehen. Dabei kann das Zu- und Abführen von Material zu bzw. von Eisenbahnarbeitsfahrzeugen gleichzeitig und auch auf derselben Seite des Arbeitsfahrzeuges erfolgen. Durch das gleichzeitige Zu- und Abführen wird die Ver- bzw. Entsorgung des Eisenbahnarbeitsfahrzeuges weiter beschleunigt. Das Zu- und Abführen auf derselben Seite hat den Vorteil, dass beispielsweise Weichen in der Nähe des Arbeitsfahrzeuges freigehalten werden können. Die Beeinträchtigung des Schienenverkehrs kann dadurch insgesamt verringert werden.

Durch die Verwendung von Transportkörpern können zudem unterschiedliche Materialien gleichzeitig zu- und/oder abgeführt werden, was bei Verwendung der bekannten Materialförder- und Siloeinheiten nicht oder nur sehr eingeschränkt möglich ist.

Besonders bevorzugt umfasst das erfindungsgemäße System zwei Züge mit Wagen, die zusammenführbar sind, um ihre Transportkörper untereinander auszutauschen. Die Stillstandszeiten von Eisenbahnarbeitsfahrzeugen können dadurch sehr gering gehalten werden, da die Transportkörper innerhalb weniger Minuten zwischen einem abgearbeiteten und einem nicht abgearbeiteten Zug ausgetauscht werden können. Nach Austausch der Transportkörper kann der zweite Zug vom ersten Zug, welcher sich am Arbeitsfahrzeug befindet, weggefahren und an beliebiger Stelle entleert und/oder beladen werden. Es ist dadurch nicht erforderlich, in unmittelbarer Nähe des Arbeitsfahrzeuges Lagerstätten vorzusehen.

Die erfindungsgemäßen Eisenbahnwagen können offen ausgebildet sein oder ein Dach und/oder Seitenwäride aufweisen. Bei Vorsehen eines Daches sind insbesondere offene Transportkörper gegen Witterungseinflüsse geschützt. Außerdem ist die erforderliche elektrische Isolierung gegenüber einer Fahrstromleitung gewährleistet. Durch Seitenwände können Witterungseinflüsse weiter ferngehalten werden.

Besonders bevorzugt ist außerdem die Ausgestaltung der Eisenbahnwagen als Zweiachswagen. Diese sind dadurch besonders leicht und kostengünstig und können auch anders als die bekannten Materialförder- und Siloeinheiten als kurze Wagen hergestellt werden. Damit können die erfindungsgemäßen Eisenbahnwagen auch einfach und kostengünstig auf dem Land und auf dem Wasser transportiert werden, um diese an Stellen zu bringen, wo noch kein Eisenbahnnetz vorhanden ist.

Der Eisenbahnwagen kann außerdem mit einem Fahrantrieb zum Fahren auf einem Gleis ausgestattet sein. Eine Lokomotive kann dadurch entbehrlich sein.

Gemäß einer Ausgestaltung der Erfindung sind die Transportbehälter zum Verfahren von Eisenbahnwagen zu Eisenbahnwagen auf Transportbahnen ausgebildet, die aneinander anschließend auf den Eisenbahnwagen vorgesehen sind.

Ein Transportbehälter kann je nach Anwendung antriebslos sein oder mit einem Antrieb zum Verfahren auf der Transportbahn versehen sein.

Weiterhin kann ein Transportbehälter mit einer Abrollbahn zum Abrollen von Rollen einer Rollenbahn ausgebildet sein, insbesondere einer Abrollbahn mit einem geeigneten Reibwiderstand zur Vermeidung eines Durchdrehens der Rollen der Rollenbahn.

Gemäß einer bevorzugten Ausführungsform der Erfindung weist ein Transportbehälter eine Abrollbahn an seiner Oberseite auf.

Ein Transportbehälter kann auch mindestens eine Abrollbahn an einer Seite oder in einer Nut an der Unterseite zur Seitenführung des Transportkörpers aufweisen.

Ein Ausführungsbeispiel der Erfindung ist in der Zeichnung dargestellt und wird nachfolgend beschrieben. Es zeigen, jeweils in schematischer Darstellung,
- Fig. 1: einen erfindungsgemäßen Eisenbahnwagen und
- Fig. 2: zwei zusammengestellte Züge aus mehreren erfindungsgemäßen Eisenbahnwagen.

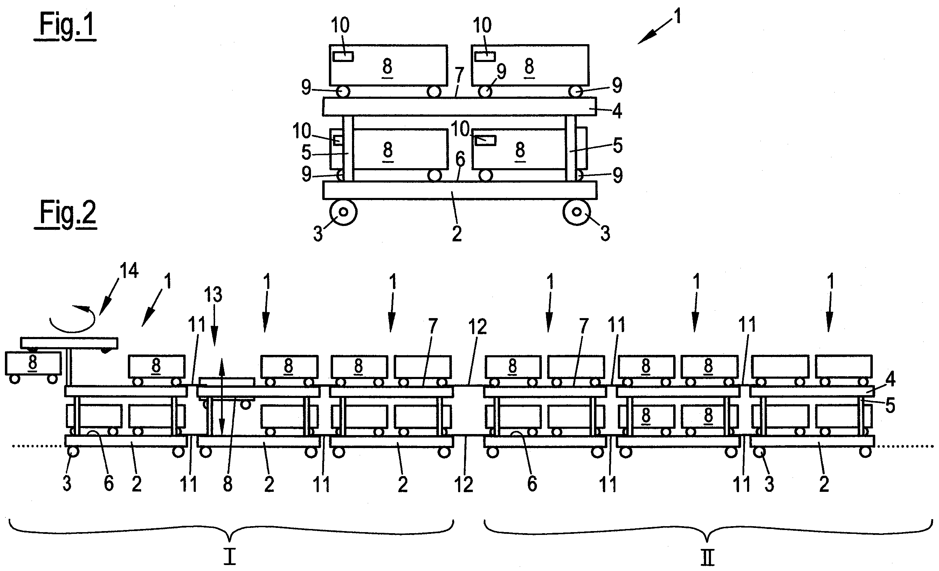

Der in Fig. 1 dargestellte Eisenbahnwagen 1 umfasst einen unteren Rahmen 2 mit zwei Radsätzen 3. Des Weiteren ist ein oberer Rahmen 4 vorgesehen, der über vertikale Streben 5 mit dem unteren Rahmen 2 verbunden ist. Auf dem unteren Rahmen 2 und dem oberen Rahmen 4 ist jeweils eine Transportbahn 6, 7 ausgebildet, auf welcher Transportkörper 8 verfahrbar sind. Bei den Transportkörpern 8 kann es sich um geschlossene Boxen, offene Transportkörper, wie Behälter oder Palletten, oder um Maschinen handeln, die auf ihrer Unterseite mit Rädern 9 versehen sind, die auf der Transportbahn 6 bzw. der Transportbahn 7 abrollen.

Die Transportkörper 8 können auf den Transportbahn 6, 7 automatisch verfahrbar sein. Hierfür sind die Transportkörper 8 mit einer maschinenlesbaren Codierung 10 versehen. Das Verfahren kann dabei auch ferngesteuert erfolgen.

Wie in Fig. 2 dargestellt, sind jeweils mehrere Wagen 1 zu einem Zug I, II zusammengestellt. Die unteren Transportbahnen 6 und die oberen Transportbahnen 7 der Wagen 1 schließen jeweils absatzlos aneinander an und verlaufen horizontal. Hierfür sind zwischen den Wagen 1 Transportbahnverbindungen 11 vorgesehen. Derartige Transportbahnverbindungen 12 können auch zwischen zwei Zügen I, II vorgesehen sein. Auf diese Weise können die Transportkörper 8 auch zwischen zwei Zügen ausgetauscht werden. Bei Verwendung von Transportbahnen 6, 7 mit Rollen oder dergleichen und Transportkörpern ohne Räder 9 kann auf solche Verbindungen 11, 12 auch verzichtet werden.

Wie ebenfalls in Fig. 2 dargestellt ist, kann mindestens einer der Wagen 1 mit einer Wechseleinrichtung 13 zwischen den Transportbahnen 6, 7 ausgestattet sein. Dadurch können die Transportkörper 8 von der einen Transportbahn 6 bzw. 7 zu der anderen Transportbahn 7 bzw. 6 gebracht werden. Dies ermöglicht eine Umsortierung oder eine Zwischenlagerung von Transportkörpern 8. Die Transportkörper können auf beiden Transportbahnen 6, 7 bevorzugt in beiden Richtungen verfahren werden. Ebenfalls in Fig. 2 dargestellt ist, dass ein an einem Ende eines Zuges I, II angeordneter Wagen 1 mit einer automatischen Be- und/oder Entladeeinrichtung 14 ausgerüstet sein kann. Diese Be- und/oder Entladeeinrichtung ermöglicht einen Materialaustausch zwischen den Transportkörpern 8 und einem hier nicht dargestellten Eisenbahnarbeitsfahrzeug oder einen Austausch von Transportkörpern 8 zwischen dem Wagen 1 und einer Lagerstelle, insbesondere auf dem Fahrgleis.

Ebenfalls nicht dargestellt ist die Möglichkeit, mindestens einen der Wagen 1 mit einer seitlichen Be- und Entlademöglichkeit für die Transportkörper 8 zu versehen. Die Transportkörper 8 können dadurch von dem Wagen 1 entnommen und gegen andere Transportkörper ausgetauscht werden, beispielsweise um mit Abraum gefüllte Transportkörper 8 gegen leere Transportkörper auszutauschen oder um leere Transportkörper 8 gegen Transportkörper mit neuem Material auszutauschen.

### Bezugszeichenliste

- 1: Eisenbahnwagen
- 2: unterer Rahmen
- 3: Radsatz
- 4: oberer Rahmen
- 5: vertikale Strebe
- 6: untere Transportbahn
- 7: obere Transportbahn
- 8: Transportkörper
- 9: Rad
- 10: Codierung
- 11: Transportbahnverbindung
- 12: Transportbahnverbindung
- 13: Transportbahnwechseleinrichtung
- 14: automatische Be- und Entladeeinrichtung

- I: erster Zug
- II: zweiter Zug

## Patentansprüche

1. Verfahren zum gleisgebundenen An- und Abtransport von Material zu bzw. von Eisenbahnarbeitsfahrzeugen, bei welchem das Material mittels mehrerer zusammenkoppelbarer Eisenbahnwagen (1) transportiert wird, wobei die Eisenbahnwagen (1) jeweils mindestens eine Transportbahn (6, 7) aufweisen, auf welcher das Material längs der Eisenbahnwagen (1) verfahrbar ist und die so ausgebildet ist, dass die Transportbahnen (6, 7) zusammengekoppelter Eisenbahnwagen (1) aneinander anschließen, wobei das Material auf den Eisenbahnwagen (1) mittels Transportbehältern (8) transportiert wird, wobei die Transportbehälter (8) auf den Eisenbahnwagen (1) längs aneinander anschließender, bevorzugt zumindest im Wesentlichen horizontal verlaufender und/oder absatzlos aneinander anschließender Transportbahnen (6, 7) von Eisenbahnwagen (1) zu Eisenbahnwagen (1) verfahren werden, insbesondere direkt auf den Transportbahnen (6, 7) und/oder insbesondere ohne zusätzliche Verlademittel wie Kräne,
**dadurch gekennzeichnet, dass**
mittels der Transportbehälter (8) unterschiedliche Materialien zu einem Eisenbahnarbeitsfahrzeug gleichzeitig zugeführt werden und/oder
mittels der Transportbehälter (8) unterschiedliche Materialien von einem Eisenbahnarbeitsfahrzeug gleichzeitig abgeführt werden,
wobei zu diesen unterschiedlichen Materialien auch Arten von Materialien wie Wasser, Kleineisen, Schwellen oder Treibstoff zählen.

2. Verfahren nach Anspruch 1,
**dadurch gekennzeichnet, dass**
die Transportbehälter (8) zum Be- und/oder Entladen der Eisenbahnwagen (1) und/oder zum Umsortieren der Transportbehälter (8) auf den Eisenbahnwagen (1) längs der Transportbahnen (6, 7) verfahren werden.

3. Verfahren nach Anspruch 1 oder 2,
**dadurch gekennzeichnet, dass**
die Transportbehälter (8) durch einen an mindestens einem der Eisenbahnwagen (1) vorhandenen Antrieb und/oder durch einen eigenen Antrieb längs der Transportbahnen (6, 7) verfahren werden, wobei, bevorzugt,
die Antriebe so gesteuert werden, dass die Transportbehälter (8) beim Verfahren einem Gleisbogen des Fahrgleises folgen.

4. Verfahren nach einem der vorstehenden Ansprüche,
**dadurch gekennzeichnet, dass**
die Transportbehälter (8) längs mindestens zwei zueinander parallelen Transportbahnen (6, 7) verfahren werden, die auf mindestens einem Teil der Eisenbahnwagen (1), insbesondere auf allen Wagen, vorgesehen sind, wobei die Transportbehälter (8) auf den Transportbahnen (6, 7) bevorzugt jeweils in beide oder in entgegengesetzte Richtungen verfahren werden.

5. Verfahren nach einem der vorstehenden Ansprüche,
**dadurch gekennzeichnet, dass**
Transportbehälter (8) durch zeitweises Entfernen von einer Transportbahn (6, 7) und/oder Wechsel zwischen den Transportbahnen (6, 7) auf den Eisenbahnwagen (1) umsortiert werden und/oder dass die Transportbehälter (8) einzeln, in Gruppen oder alle gemeinsam verfahren werden.

6. Verfahren nach einem der vorstehenden Ansprüche,
**dadurch gekennzeichnet, dass**
das Verfahren und/oder das Be- und Entladen der Transportbehälter (8) ferngesteuert erfolgt.

7. Verfahren nach einem der vorstehenden Ansprüche,
**dadurch gekennzeichnet, dass**
die Transportbehälter (8) zum Transport gegenüber einer Transportbahn (6, 7) oder einem Eisenbahnwagen (1) verriegelt werden.

8. Verfahren nach einem der vorstehenden Ansprüche,
**dadurch gekennzeichnet, dass**
mit den Eisenbahnwagen (1) zusätzlich Waren wie Flüssigkeiten oder Gase transportiert und/oder gefördert werden, insbesondere zu und/oder von einem Eisenbahnarbeitsfahrzeug.

9. Verfahren nach einem der vorstehenden Ansprüche,
**dadurch gekennzeichnet, dass**
ein Zu- und Abführen von Material zu bzw. von einem Eisenbahnarbeitsfahrzeug gleichzeitig erfolgt und/oder dass ein Zu- und Abführen von Material zu bzw. von einem Eisenbahnarbeitsfahrzeug auf derselben Seite des Arbeitsfahrzeugs erfolgt.

10. Verfahren nach einem der vorstehenden Ansprüche,
**dadurch gekennzeichnet, dass**
das Material auf einer Transportbahn (6 oder 7) zu einem Eisenbahnarbeitsfahrzeug antransportiert und auf einer anderen Transportbahn (6 oder 7) von einem Eisenbahnarbeitsfahrzeug abtransportiert wird oder dass die Transportbehälter (8) auf der einen Transportbahn (6 oder 7) voll und auf der anderen Transportbahn (6 oder 7) leer verfahren werden

11. Verfahren nach einem der vorstehenden Ansprüche,
**dadurch gekennzeichnet, dass**
Transportbehälter (8) zum Austausch seitlich von den Eisenbahnwagen (1) entnommen werden.

12. Verfahren nach einem der vorstehenden Ansprüche,
**dadurch gekennzeichnet, dass**
ein Austausch längs der Fahrtrichtung des Zuges mit auf dem Fahrgleis gelagerten Transportbehältern (8) erfolgt.

13. Verfahren nach einem der vorstehenden Ansprüche,
**dadurch gekennzeichnet, dass**
nach einem Ver- und/oder Entsorgen eines Eisenbahnarbeitsfahrzeugs mit einem ersten Zug (I) mit Eisenbahnwagen (1) ein zweiter Zug (II) mit Eisenbahnwagen (1) herangefahren wird und dass dann die Transportbehälter (8) des ersten Zuges (I) gegen die Transportbehälter (8) des zweiten Zuges (II) durch Verfahren der Transportbehälter (8) längs der Transportbahnen (6, 7) ausgetauscht werden.

## Claims

1. A method for the rail-bound transportation in and away of material to or from railroad work vehicles, in which the material is transported by means of a plurality of railroad cars (1) which can be coupled together, wherein the railroad cars (1) each have at least one conveyor track (6, 7) on which the material is movable along the railroad cars (1) and which is configured such that the conveyor tracks (6, 7) of railroad cars (1) which are coupled together adjoin one another; wherein the material is transported on the railroad cars (1) by means of transport containers (8); and wherein the transport containers (8) are moved on the railroad cars (1) from railroad car (1) to railroad car (1) along mutually adjoining conveyor tracks (6, 7) which preferably extend at least substantially horizontally and/or which adjoin one another without a step, in particular directly on the conveyor tracks (6, 7) and/or in particular without additional loading means such as cranes,
**characterized in that**
different materials are simultaneously supplied to a railroad work vehicle by means of the transport containers (8); and/or
**in that** different materials are simultaneously supplied away from a railroad work vehicle by means of the transport containers (8), with these different materials also including types of materials such as water, ironware, sleepers or fuel.

2. A method in accordance with claim 1,
**characterized in that**
the transport containers (8) are moved along the conveyor tracks (6, 7) for the loading and/or unloading of the railroad cars (1) and/or for the resorting of the transport containers (8) on the railroad cars (1).

3. A method in accordance with claim 1 or claim 2,
**characterized in that**
the transport containers (8) are moved along the conveyor tracks (6, 7) by a drive present at at least one of the railroad cars (1) and/or by a separate drive, with, preferably,
the drives being controlled such that the transport containers (8) follow a track arc of the travel track on moving.

4. A method in accordance with any one of the preceding claims,
**characterized in that**
the transport containers (8) are moved along at least two mutually parallel conveyor tracks (6, 7) which are provided on at least some of the railroad cars (1), in particular on all the cars, with the transport containers (8) preferably being moved on the conveyor tracks (6, 7) in both directions or in opposite directions respectively.

5. A method in accordance with any one of the preceding claims,
**characterized in that**
transport containers (8) are resorted by time-wise removal from a conveyor track (6, 7) and/or by an exchange between the conveyor tracks (6, 7) on the railroad cars (1); and/or **in that** the transport containers (8) are moved individually, in groups or all together.

6. A method in accordance with any one of the preceding claims,
**characterized in that**
the moving and/or the loading and unloading of the transport containers (8) takes place by remote control.

7. A method in accordance with any one of the preceding claims,
**characterized in that**
the transport containers (8) are latched with respect to a conveyor track (6, 7) or with respect to a railroad car (1) for the transportation.

8. A method in accordance with any one of the preceding claims,
**characterized in that**
goods such as liquids or gasses are additionally transported and/or conveyed by the railroad cars (1), in particular to and/or away from a railroad work vehicle.

9. A method in accordance with any one of the preceding claims,
**characterized in that**
a supply and removal of material to or from a railroad work vehicle takes place simultaneously; and/or **in that** a supply and removal of material to or from a railroad work vehicle takes place on the same side of the work vehicle.

10. A method in accordance with any one of the preceding claims,
**characterized in that**
the material is transported on a conveyor track (6 or 7) to a railroad work vehicle and is transported away on another conveyor track (6 or 7) from a railroad work vehicle; or **in that** the transport containers (8) are moved on the one conveyor track (6 or 7) while full and on the other conveyor track (6 or 7) while empty.

11. A method in accordance with any one of the preceding claims,
**characterized in that**
transport containers (8) are removed laterally from the railroad cars (1) for replacement.

12. A method in accordance with any one of the preceding claims,
**characterized in that**
a replacement takes place along the direction of travel of the train with transport containers (8) supported on the travel track.

13. A method in accordance with any one of the preceding claims,
**characterized in that**,
after a supply and/or waste disposal of a railroad work vehicle using a first train (I) having railroad cars (1), a second train (II) having railroad cars (1) is traveled in; and **in that** the transport containers (8) of the first train (I) are then replaced with the transport containers (8) of the second train (II) by moving the transport containers (8) along the conveyor tracks (6, 7).

## Revendications

1. Procédé pour la livraison et l'évacuation sur voie ferrée de matériaux à destination et/ou en provenance de véhicules de travaux ferroviaires, dans lequel
le matériau est transporté au moyen de plusieurs wagons ferroviaires (1) pouvant être accouplés entre eux,
les wagons ferroviaires (1) présentant chacun au moins une piste de transport (6, 7) sur laquelle le matériau peut être déplacé le long des wagons ferroviaires (1) et qui est réalisée de telle sorte que les pistes de transport (6, 7) de wagons ferroviaires (1) accouplés entre eux sont adjacentes les unes aux autres,
le matériel est transporté sur les wagons ferroviaires (1) au moyen de conteneurs de transport (8),
les conteneurs de transport (8) sur les wagons ferroviaires (1) sont déplacés d'un wagon ferroviaire (1) à l'autre (1) le long de pistes de transport (6, 7) adjacentes les unes aux autres et s'étendant de préférence au moins sensiblement horizontalement et/ou adjacentes les unes aux autres sans gradin, en particulier directement sur les pistes de transport (6, 7) et/ou en particulier sans moyens de chargement supplémentaires, tels que des grues,
**caractérisé en ce que**
au moyen des conteneurs de transport (8), différents matériaux peuvent être acheminés simultanément vers un véhicule de travail ferroviaire et/ou au moyen des conteneurs de transport (8), différents matériaux peuvent être enlevés simultanément depuis un véhicule de travail ferroviaire, ces différents matériaux comprennent également des types de matériaux tels que l'eau, le petit matériel d'assemblage, les traverses ou le carburant.

2. Procédé selon la revendication 1,
**caractérisé en ce que**
les conteneurs de transport (8) sont déplacés le long des pistes de transport (6, 7) pour le chargement et/ou le déchargement des wagons ferroviaires (1) et/ou pour le re-triage des conteneurs de transport (8) sur les wagons ferroviaires (1).

3. Procédé selon la revendication 1 ou 2,
**caractérisé en ce que**
les conteneurs de transport (8) sont déplacés le long des pistes de transport (6, 7) par un entraînement présent sur l'un au moins des wagons ferroviaires (1) et/ou par un propre entraînement,
les entraînements étant de préférence commandés de telle sorte que lors du déplacement les conteneurs de transport (8) suivent une courbure de la voie ferrée.

4. Procédé selon l'une des revendications précédentes,
**caractérisé en ce que**
les conteneurs de transport (8) sont déplacés le long d'au moins deux pistes de transport (6, 7) parallèles l'une à l'autre qui sont prévues sur au moins une partie des wagons ferroviaires (1), en particulier sur tous les wagons ferroviaires, les conteneurs de transport (8) étant déplacés sur les pistes de transport (6, 7) de préférence chacun dans les deux sens ou dans des sens opposés.

5. Procédé selon l'une des revendications précédentes,
**caractérisé en ce que**
les conteneurs de transport (8) sont retriés sur les wagons ferroviaires (1) par enlèvement temporaire depuis une piste de transport (6, 7) et/ou par changement entre les pistes de transport (6, 7), et/ou **en ce que** les conteneurs de transport (8) sont déplacés individuellement, en groupe ou tous ensemble.

6. Procédé selon l'une des revendications précédentes,
**caractérisé en ce que**
le déplacement et/ou le chargement et le déchargement des conteneurs de transport (8) s'effectuent par télécommande.

7. Procédé selon l'une des revendications précédentes,
**caractérisé en ce que**
pour le transport, les conteneurs de transport (8) sont verrouillés par rapport à une piste de transport (6, 7) ou à un wagon ferroviaire (1).

8. Procédé selon l'une des revendications précédentes,
**caractérisé en ce que**
les wagons ferroviaires (1) permettent de transporter et/ou de convoyer en supplément des marchandises telles que des liquides ou des gaz, en particulier à destination et/ou en provenance d'un véhicule de travail ferroviaire.

9. Procédé selon l'une des revendications précédentes,
**caractérisé en ce que**
la livraison et l'évacuation de matériaux à destination ou en provenance d'un véhicule de travail ferroviaire sont effectuées simultanément et/ou **en ce que**
la livraison et l'évacuation de matériaux à destination ou en provenance d'un véhicule de travail ferroviaire sont effectuées sur le même côté du véhicule de travail.

10. Procédé selon l'une des revendications précédentes,
**caractérisé en ce que**
le matériau est transporté vers un véhicule de travail ferroviaire sur une piste de transport (6 ou 7) et il est enlevé depuis un véhicule de travail ferroviaire sur une autre piste de transport (6 ou 7), ou **en ce que** les conteneurs de transport (8) sont déplacés pleins sur une piste de transport (6 ou 7) et sont déplacés vides sur l'autre piste de transport (6 ou 7).

11. Procédé selon l'une des revendications précédentes,
**caractérisé en ce que**
les conteneurs de transport (8) sont retirés latéralement depuis les wagons ferroviaires (1) pour être échangés.

12. Procédé selon l'une des revendications précédentes,
**caractérisé en ce que**
un échange a lieu le long de la direction de circulation du train avec des conteneurs de transport (8) stockés sur la voie ferrée.

13. Procédé selon l'une des revendications précédentes,
**caractérisé en ce que**
après un chargement et/ou déchargement d'un véhicule de travail ferroviaire par un premier train (I) de wagons ferroviaires (1), un deuxième train (II) de wagons ferroviaires (1) est approché, puis les conteneurs de transport (8) du premier train (I) sont échangés contre les conteneurs de transport (8) du deuxième train (II) par déplacement des conteneurs de transport (8) le long des pistes de transport (6, 7).
